# EUROPÄISCHE PATENTSCHRIFT

(11) **EP 0 623 686 B1**
(45) Veröffentlichungstag und Bekanntmachung des Hinweises auf die Patenterteilung: **28.01.1998**
(21) Anmeldenummer: 94105830.7
(22) Anmeldetag: 15.04.1994
(51) Int. Cl.: C22C 9/00, G02C 5/00

(54) **Verwendung einer Kupfer-Titan-X-Legierung zur Herstellung von Brillenteilen**
Application of a copper-titanium-X alloy for spectacle frames
Utilisation d'un alliage cuivre-titane-X pour montures de lunettes

(30) Priorität: 04.05.1993 DE 4314625
(43) Veröffentlichungstag der Anmeldung: 09.11.1994
(73) Patentinhaber: WIELAND-WERKE AG, 89079 Ulm (DE)
(72) Erfinder: Kuhn, Hans-Achim, Dr.-Ing., D-89257 Illertissen (DE)

(56) Entgegenhaltungen:
- DE-A- 4 224 280
- DE-C- 593 783
- US-A- 2 943 960

## Beschreibung

Die Erfindung betrifft die Verwendung von Kupfer-Titan-Eisen-, Kupfer-Titan-Zirkon- sowie Kupfer-Titan-Magnesium-Legierungen zur Herstellung von Drähten und Profilen für Brillenteile. Unter Brillenteilen sollen dabei insbes. Brillenbügel, Brillengestelle, Augenrandprofile, Nasenbügel und Brillenscharniere verstanden werden.

Von einer guten Brillenlegierung werden u.a. ausreichende mechanische Festigkeit (Zugfestigkeit > 600, Härte 180 - 280 HV), ein niedriger E-Modul, ausreichende Entfestigungsbeständigkeit, ein ansprechendes optisches Aussehen, gute Polierbarkeit und Beschichtbarkeit erwartet.

Metallische Gebrauchsgegenstände wie z.B. Brillenteile aus nickelhaltigen Legierungen können bei Kontakt Hautallergien auslösen. Nickelallergien zählen inzwischen zu den am häufigsten auftretenden Kontaktallergien. Insbes. die optikdrahtverarbeitende Industrie sucht daher nach nickelfreien Ersatzwerkstoffen zur Fertigung von Brillenbügeln, Augenrandprofilen, Nasenbügeln und Scharnieren. Nickelfreie Legierungen sollen die Eigenschaften der bisher eingesetzten nickelhaltigen Neusilberlegierungen (z.B. CuNil8Zn20) substituieren können. Dabei werden hohe Ansprüche an das Kaltumformvermögen und an das Entfestigungsverhalten gestellt. Die übliche Verbindungsarbeit ist das Hartlöten bei Temperaturen zwischen 620 und 680 °C. Das Gefüge der Brillenteile erfährt an den Verbindungsstellen eine Kurzzeitglühung und damit eine Erweichung. Um die Funktionstüchtigkeit eines Brillenteiles auch nach den Verbindungsarbeiten mit Hartlot zu garantieren, ist es ein Wunsch der Brillengestellfertiger, daß die Härte nicht 150 HV unterschreitet.

Der Erfindung liegt daher die Aufgabe zugrunde, für den obengenannten Verwendungszweck eine Kupferlegierung vorzuschlagen, die bei kostengünstiger Herstellbarkeit und günstigen mechanischen Festigkeiten keinen Nickelgehalt aufweist.

Die Aufgabe wird erfindungsgemäß durch die Verwendung einer Kupfer-Titan-X-Legierung gelöst, die aus
2,0 bis 3,5 % Titan,
X = 0,1 bis 1,0 % Eisen oder
X = 0,05 bis 0,5 % Zirkon oder
X = 0,5 bis 1,5 % Magnesium,
   Rest Kupfer und üblichen Verunreinigungen besteht,
wobei die vakkuumgegossene und stranggepreßte Legierung nach Kaltumformung, Homogenisierungsglühung zwischen 850 und 1000 °C (10 min bis 10 h), rascher Abkühlung mit einer Abkühlgeschwindigkeit im Bereich von 20 °C/s bis 150 °C/s und Kaltumformung zwischen 50 % und 90 % Umformgrad eine Härte von mindestens 200 HV10 aufweist
(die %-Angaben der Legierungsbestandteile beziehen sich dabei auf das Gewicht).

Ausscheidungsgehärtete binäre Kupfer-Titan-Legierungen mit Titangehalten bis 4,3 Gew.-% werden bereits im Anwendungsbereich der Mikroelektronik z.B. als Steckverbinder-, Schaltwerkstoffe und Relais wegen ihrer hohen Festigkeit und ihres hohen Erweichungspunktes als Werkstoffklasse zwischen Phosphorbronze und Beryllium-Kupfer angesehen. Kupfer-Titan gilt allgemein als Federwerkstoff.

Es sind weiterhin bspw. aus der DE-PS 593.783 ternäre Kupfer-Titan-Legierungen bekannt. Dort findet sich allerdings kein Hinweis auf den vorliegenden Verwendungszweck.

Die für die Fertigung von Augenrandprofilen ebenfalls bekannte Cu-Ti2,0-Cr0,5-Legierung erreicht zwar die gewünschte Eigenschaft der ausreichenden Resthärte nach Verbindungsarbeiten mit Hartlot, doch steht in der aktuellen Diskussion um die toxologische Wirkung von Legierungsbestandteilen Chrom zur Disposition. So werden z.B. im Einsatz befindliche chromhaltige Schweißkappen dieses Legierungstyps wegen der Gefahr der Chromoxidbildung zunehmend substituiert werden. Um ähnlicher Überlegung bei der Brillenteilefertigung vorzubeugen, kann Chrom erfindungsgemäß durch Eisen, Magnesium oder Zirkon ersetzt werden.

Die Festigkeit der vorliegenden Legierungsklasse wird im wesentlichen wie im binären System CuTi durch Ausscheidungen bestimmt (vgl. bspw. A.W. Thompson, J.L. Williams in Metallurgical Transaction A, 15 (1984), S. 931 ff.).

Durch Glühbehandlungen zwischen 300 und 500 °C des α-Mischkristalls läuft bei nicht zu schneller Abkühlung zunächst eine spinodale Entmischung ab. Die Ausscheidungen sind zunächst kohärent. Mit zunehmender Glühdauer treten dann geordnete tetragonale β-Übergangsphasen auf. Eine Zunahme der Härte infolge der Kohärenzverspannungen kann registriert werden, mit noch längerer Glühdauer setzt die diskontinuierliche Ausscheidung der Gleichgewichtsphase β entlang der Korngrenzen ein. Oberhalb einer Grenztemperatur stellt sich eine Gleichgewichtsphase auch als Widmannstättensches Gefüge dar. Der Zusatz von Magnesium verschiebt die Entfestigungstemperatur zu hohen Werten, da Magnesium die Löslichkeit im Titan verbessert. Eisen wirkt kornfeinend. Die Löslichkeit von Eisen in Kupfer ist beschränkt, wegen des trägen Verlaufs des Ausscheidungsvorgangs ist die härtende Wirkung ebenfalls beschränkt. Kontinuierliche und diskontinuierliche CuTiFe-Ausscheidungen können nachgewiesen werden.

Die Legierungen werden im Vakuumofen erschmolzen. Mit den genannten Legierungszusätzen können erfindungsgemäß die Eigenschaften höherlegierter binärer Kupfer-Titan-Legierungen mit bis zu 4,3 Gew.-% Titan erreicht werden, ohne daß die Gefahr der Warmbrüchigkeit besteht. Oberhalb 3,5 Gew.-% Titan besteht die Gefahr, daß auch ternäre Legierungen nicht warm umgeformt werden können.

Als bevorzugte Ausführungsformen der Erfindung wird die Verwendung einer Kupferlegierung entsprechend den Zusammensetzungen nach den Ansprüchen 2 bis 4 empfohlen. Gemäß Anspruch 5 erfährt die Kupferlegierung vorzugsweise eine abschließende Kaltverformung von mindestens 20 %.

Erfindungsgemäß eignen sich die Kupfer-Titan-Eisen-, Kupfer-Titan-Zirkon- und Kupfer-Titan-Magnesium-Legierungen für die optikdrahtverarbeitende Industrie, da sie nickelfrei sind, ein ausgezeichnetes Kaltumformvermögen besitzen und bei einer erfindungsgemäßen thermomechanischen Behandlung hohe Resthärte nach Kurzzeitentfestigungsglühungen aufweisen. Homogenisierte und kaltverfestigte Drähte können Härten von über 280 HV besitzen. Nach 30sekündigen Glühungen im Salzbad - damit sollen die Temperatureinflüsse des Hartlötens nachgestellt werden - werden bei 700 °C immer noch Resthärten von über 150 HV10 registriert.

Die erfindungsgemäße Verarbeitung von Drahthalbzeug zu Brillenteilen kann also mit kalt umgeformtem und homogenisiertem Halbzeug durchgeführt werden. Durch das rasche Abkühlen wird der homogenisierte Zustand eingefroren. Nach einem für die Dimension und Kontur des Brillenteils notwendigen Kaltumformgrad gefährdet dann die abschließende Verbindungsarbeit durch Hartlöten erfindungsgemäß nicht die gewünschten Federeigenschaften, die durch eine Resthärte von über 150 HV charakterisiert werden. Homogenisierte (900 °C/3 h/H₂O) und anschließend kaltumgeformte Drähte weisen gegenüber weichgeglühten (700 °C/3 h/H₂O) und kaltumgeformten Drähten die höhere Resthärte nach Entfestigungsglühungen zwischen 600 und 700 °C auf.

Die Erfindung wird anhand des folgenden Ausführungsbeispiels näher erläutert:

Bolzen der Legierungen CuTi2,5Fe0,5 Gew.-%, CuTi2,5Zr0,1 Gew.-% und CuTi2,5Mgl,0 Gew.-% wurden mit einer Vakuumgießanlage zu Gußstangen mit ⌀ 137 mm bei 1140 bis 1150 °C vergossen. Die überdrehten Gußbolzen wurden im Strangpreßverfahren zu Stangen mit ⌀ 25 mm verpreßt, wobei die Preßtemperatur 850 °C betrug. Anschließend wurden die Stangen über zwei dreistündige Zwischenglühungen bei 700 °C an das Vierkantabmaß 5,2 mm gewalzt. 60 % kaltumgeformter, bei 900 °C homogenisierter, schnell abgekühlter(mit ca. 100 °C/s) und 60 % abschließend kaltumgeformter Walzdraht wird durch die erreichten Härten HV10 charakterisiert:

| | CuTi2,5Fe0,5 | CuTi2,5Zr0,1 | CuTi2,5Mg1,0 |
|---|---|---|---|
| HV10 | 250 | 248 | 255 |

Aus diesem Zustand resultieren nach 3stündigen und 30sekündigen Glühungen bei 650 °C folgende Resthärten HV10:

| | CuTi2,5Fe0,5 | CuTi2,5Zr0,1 | CuTi2,5Mg1,0 |
|---|---|---|---|
| 3 h | 170 | 170 | 130 |
| 30 s | 240 | 250 | 300 |

Damit erfüllen Drähte der genannten Legierungen die Forderungen der Brillengestellfertiger nach Entfestigungsverhalten mit Resthärten von HV > 150 nach Verbindungsarbeit mit Hartlot.

## Patentansprüche

1. Verwendung einer Kupfer-Titan-X-Legierung, bestehend aus
2,0 bis 3,5 Gew.-% Titan,
X = 0,1 bis 1,0 Gew.-% Eisen oder
X = 0,05 bis 0,5 Gew.-% Zirkon oder
X = 0,5 bis 1,5 Gew.-% Magnesium,
Rest Kupfer und üblichen Verunreinigungen,
wobei die vakuumgegossene und stranggepreßte Legierung nach Kaltumformung, Homogenisierungsglühung zwischen 850 und 1000 °C (10 min bis 10 h), rascher Abkühlung mit einer Abkühlgeschwindigkeit im Bereich von 20 °C/s bis 150 °C/s und Kaltumformung zwischen 50 % und 90 % Umformgrad eine Härte von mindestens 200 HV10 aufweist,
zur Herstellung von Drähten und Profilen für Brillenteile.

2. Verwendung einer Kupferlegierung nach Anspruch 1 mit 0,3 bis 0,6 Gew.-% Eisen für den Zweck nach Anspruch 1.

3. Verwendung einer Kupferlegierung nach Anspruch 1 mit 0,1 bis 0,5 Gew.-% Zirkon für den Zweck nach Anspruch 1.

4. Verwendung einer Kupferlegierung nach Anspruch 1 mit 0,8 bis 1,2 Gew.-% Magnesium für den Zweck nach Anspruch 1.

5. Verwendung einer Kupferlegierung nach einem oder mehreren der Ansprüche 1 bis 4, die eine abschließende Kaltverformung von mindestens 20 % erfahren hat, für den Zweck nach Anspruch 1.

## Claims

1. The use of a copper-titanium-X alloy, consisting of
from 2.0 to 3.5 % by weight titanium,
X = from 0.1 to 1.0 % by weight iron or
X = from 0.05 to 0.5 % by weight zirconium or
X = from 0.5 to 1.5 % by weight magnesium,
the remainder copper and customary impurities,
wherein the vacuum-cast and extruded alloy has, after cold-working, homogenising annealing at from 850 to 1000°C (from 10 minutes to 10 hours), rapid cooling at a cooling rate in the range of from 20°C/second to 150°C/second, and cold-working to from 50 % to 90 % strain, a hardness of at least 200 HV10, for the manufacture of wires and shaped pieces for spectacle parts.

2. The use of a copper alloy according to claim 1 comprising from 0.3 to 0.6 % by weight iron for the purpose according to claim 1.

3. The use of a copper alloy according to claim 1 comprising from 0.1 to 0.5 % by weight zirconium for the purpose according to claim 1.

4. The use of a copper alloy according to claim 1 comprising from 0.8 to 1.2 % by weight magnesium for the purpose according to claim 1.

5. The use of a copper alloy according to one or more of claims 1 to 4 that has undergone final cold-working of at least 20 % for the purpose according to claim 1.

## Revendications

1. Utilisation d'un alliage cuivre-titane-X, constitué de
2,0 à 3,5 % en masse de titane
X = 0,1 à 1,0 % en masse de fer ou
X = 0,05 à 0,5 % en masse de zirconium ou
X = 0,5 à 1,5 % en masse de magnésium,
le reste étant constitué par du cuivre et des impuretés courantes,
l'alliage coulé sous vide et extrudé présentant une dureté d'au moins 200 HV10 après formage à froid, recuit d'homogénéisation entre 850 et 1000°C (10 minutes à 10 heures), refroidissement rapide à une vitesse de refroidissement comprise entre 20°C/s et 150°C/s et formage à froid avec un taux de déformation compris entre 50 % et 90 %,
pour la fabrication de fils et de profilés destinés à des montures de lunettes.

2. Utilisation d'un alliage de cuivre selon la revendication 1 contenant 0,3 à 0,6 % en masse de fer pour l'application selon la revendication 1.

3. Utilisation d'un alliage de cuivre selon la revendication 1 contenant 0,1 à 0,5 % en masse de zirconium pour l'application selon la revendication 1.

4. Utilisation d'un alliage de cuivre selon la revendication 1 contenant 0,8 à 1,2 % en masse de magnésium pour l'application selon la revendication 1.

5. Utilisation d'un alliage de cuivre selon l'une ou plusieurs des revendications 1 à 4, ayant subi une déformation à froid finale d'au moins 20 %, pour l'application selon la revendication 1.
